# EUROPEAN PATENT SPECIFICATION

(11) **EP 3 189 517 B1**
(45) Date of publication and mention of the grant of the patent: **04.07.2018**
(21) Application number: 15794650.0
(22) Date of filing: 04.09.2015
(51) Int. Cl.: G09F 15/00

(54) **HEATING DEVICE FOR HOT DRINKS AUTOMATIC DISPENSING MACHINES**
ERWÄRMUNGSVORRICHTUNG FÜR AUTOMATEN ZUR AUSGABE VON HEISSGETRÄNKEN
DISPOSITIF CHAUFFANT POUR DISTRIBUTEURS AUTOMATIQUES DE BOISSONS CHAUDES

(30) Priority: 04.09.2014 IT VI20140222
(43) Date of publication of application: 12.07.2017
(73) Proprietor: Manea Vending S.r.l., 36010 Zane' (VI) (IT)
(72) Inventor: NICOLINI, Antonio, 36010 Zane' (VI) (IT)
(74) Representative: Burchielli, Riccardo
(86) International application number: PCT/IT2015/000211
(87) International publication number: WO 2016/051427

(56) References cited:
- FR-A5- 2 124 943
- GB-A- 752 411
- GB-A- 792 666
- US-A- 4 757 182

## Description

The present invention generally relates to a heating device for automatic "stand-alone" vending machines, that is to say machines which are able to prepare and deliver hot drinks obtained starting from soluble products.

More particularly, the invention relates to a heating device which is capable of heating instantaneously the water required for preparing hot drinks delivered from automatic vending machines.

Automatic "stand-alone" vending machines, which are capable of delivering hot drinks, typically use, for producing hot water and/or steam, known boilers (with "thick-film" heating elements or immersed "thick-film" heating elements), heat exchangers (having an integrated pump and "thick-film" heating elements) or so-called "Thermoblock" devices, which consist of a disk, provided with inlet and outlet pipes and one or more heating elements which are placed into the water.

However, said known heating systems have still some drawbacks, such as a reduced precision in obtaining a prefixed temperature, a timing still long to reach the prefixed temperature, a long and unnecessary use of the "stand-by" function, high energy consumption and relevant overall dimensions.

A heating device for hot drinks automatic dispensing machine having the features of the preamble of appended claim 1 is known for example from FR2124943A5.

The present invention aims to overcome the above mentioned prior art drawbacks and, in particular, the main purpose of the invention is to provide a heating device for automatic vending machines of hot drinks, which has, at the same time, a high precision in obtaining the prefixed heating temperature, which is immediately reached.

Another object of the present invention is to provide a heating device for automatic vending machines of hot beverages, which allows a considerable energy saving, also considering that the machine does not have a stand-by function.

Another object of the invention is to provide a heating device for automatic vending machines of hot drinks, which contributes to a reduction of the overall dimensions of the internal and external framework of the known vending machines.

A further object of the invention is to provide a heating device for automatic vending machines of hot drinks at substantially low costs, in view of the advantages obtained and with respect to the known heating devices.

These and other objects are obtained by a heating device for automatic vending machines of hot drinks, according to the attached claim 1; other technical detailed features of the heating device are also given in the dependent claims.

Advantageously, the heating device according to the invention includes a modular element which incorporates a thin resistive wire coil.

Said resistive element substantially enables an instantaneous heating (3-4 seconds to reach the prefixed temperature) of the water in order to prepare hot drinks produced from soluble products by vending machines and/or automatic "stand-alone" machines.

The device of the present invention allows to exceed the performance of the classic heating systems (boilers and/or heat exchangers and/or "Thermoblock" devices) that are currently used in known vending machines of hot drinks or beverages.

The modular element is structurally constituted by a disk or a plate, which is configured so as to be inserted in respective slots or seats of the machine's distributor, so as to reduce the overall dimensions of the whole heating system of the machine.

The above mentioned objects and advantages, as well as others that will be more clear in the following description, will be more clear from the following description relating to a preferred embodiment of the heating device for automatic vending machines of hot drinks and from the enclosed drawings, in which:

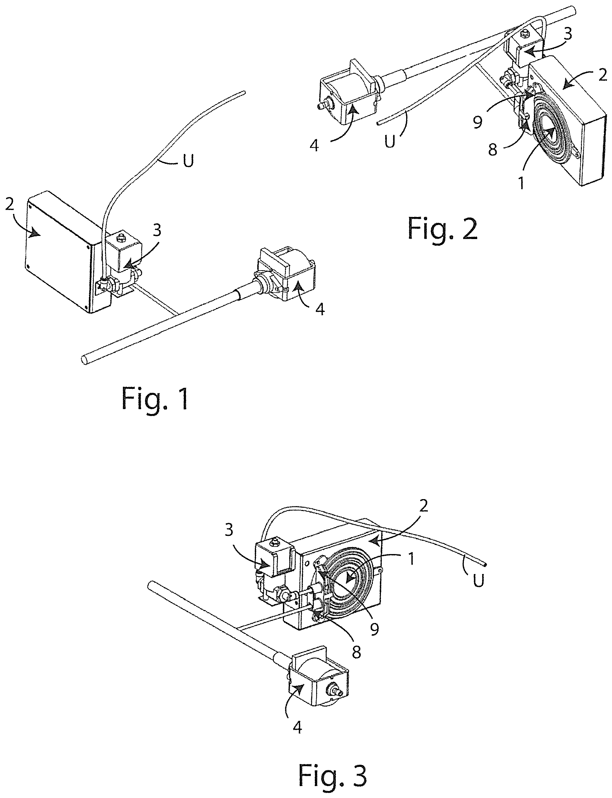

- figures 1, 2 and 3 show a plurality of views of the heating device for automatic vending machines of hot drinks, according to the invention;

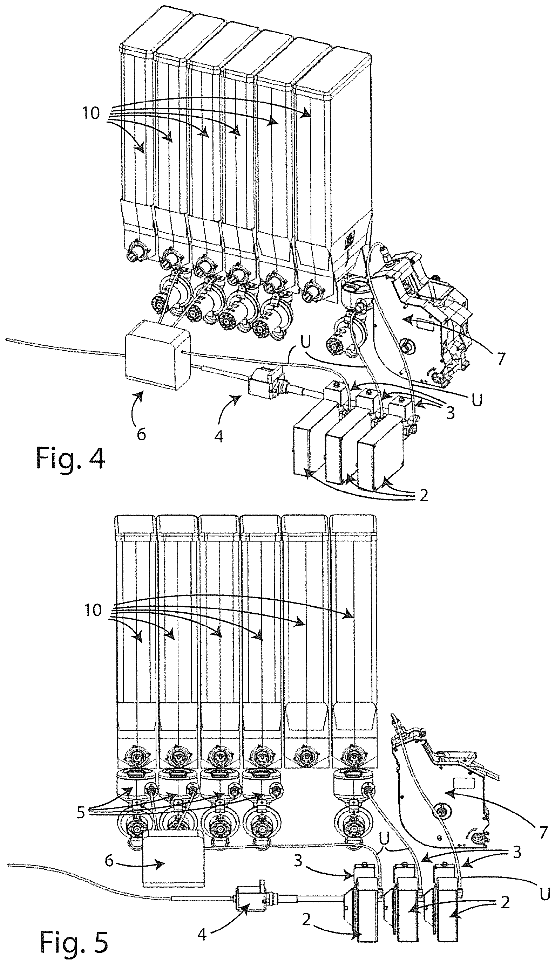

- figures 4 and 5 show partial views of a dispensing system of hot drinks, which is placed into the distributor of a vending machine and to which the heating device according to the invention is connected.

With reference to the above mentioned figures, the heating device for automatic vending machines of hot drinks, according to the present invention, comprises one or more modular elements (plates) 2, on each of which a coil of a thin resistive wire is mounted or embedded.

The plate or modular element 2 constitutes a rigid support for incorporating the coil 1 and is connected at the output to a solenoid valve 3, while the entry of the heating device is connected to a water supply pump 4, which is provided with a non-return valve so as to keep the circuit under pressure.

As already mentioned, it is possible to use more modular elements 2 inside the vending machine of hot beverages, each of which can be put inside a respective and suitable seat, so that each output of the respective solenoid valve 3 allows to direct the hot water to the mixers 5 placed below the containers 10 of the soluble products or to a selector device 6 which is configured to deliver the water to the mixers 5 (when a single or a double heating device is used) or to a brewing infusion unit 7, such for example a capsule or a coffee pod.

The amount of water delivered by the supply pump 4 is electronically regulated by a volumetric meter and corresponds to the amount necessary for delivering the different hot drinks to be dispensed by the machine. Moreover, each modular element 2 is provided with a temperature sensor 8 and a safety thermostat 9, so as to manage and control the on and off functions and the overall security of the machine.

In particular, the temperature sensor 8 allows to establish the exact time of reaching the prefixed temperature of the water, so as to know the time instant when the solenoid valve 3 is activated, so as to deliver the liquid, at the prefixed temperature, to the other elements 5, 6, 7 for preparing the hot drink.

As the prefixed temperature is almost instantaneously reached (about 3-4 seconds after the activation of the heating device), also the thermal inertia is very low (unlike the known boilers) and this allows to select different temperatures for each different working cycle (instead, the temperature reached by the known boilers cannot be modulated, because of the large thermal inertia).

The use of a heating device with modular elements 2 according to the present invention also has the advantage of being expandable and also allows to use single addressable resistive elements, thus obtaining a subdivision of the working cycle, so as to increase the life of the heating device and to control the settings of mixing water and soluble products.

In fact, not all the hot beverages may be provided in an optimal way to the same temperature; for example, an effective supply of coffee requires water temperatures between 80°C and 90°C while the supply of tea requires temperatures of water of about 60°C.

Therefore, advantageously with respect to the prior art, the use of a heating device according to the present invention allows to heat, for example, one modular element 2 at 60°C and another modular element 2 at 90°C and also to reverse the function, since the low thermal inertia of the resistive elements and the high speed of heating allows to instantly modulate the temperature of the drink or beverage obtained.

Moreover, by activating or deactivating each modular element 2 it is also possible to have mixtures of hot and cold water to increase the taste of the beverage, thus optimizing the delivering process, unlike the known heating systems.

The elements 2 thus allows to modulate in a complete way the machine, so as to achieve the exact value of the prefixed temperature through a simple control of the machine, thus obtaining a partitioning of the outputs through the use of the solenoid valves 3, as well as the switching on or off of said one or more modular elements 2 allows a low energy consumption with respect to the known heating devices.

From the above description it is clear that the heating device for automatic vending machines of hot beverages, which is the object of the present invention, achieves the intended objects and the following advantages, such as:
- high accuracy in reaching the prefixed temperature;
- immediacy in reaching the prefixed temperature (3-4 seconds);
- no stand-by functions;
- energy saving;
- reduced dimensions of the heating system.

Finally, it is clear that other variations may be made to the heating device of the invention, without departing from the principles of novelty inherent in the inventive idea expressed in the appended claims.

Where technical features mentioned in the claims are followed by reference signs, said reference signs have been introduced with the sole purpose of increasing the intelligibility of the claims themselves and, accordingly, said reference signs do not have any limiting effect on the interpretation of each element, which is therefore identified by way purely of example by said reference signs.

## Claims

1. Heating device for hot drinks automatic dispensing machines having an entry connected to a water supply pump (4), which is provided with a non-return valve so as to keep the circuit under pressure and which is electronically regulated by a volumetric meter for delivering the amount of water necessary for the different hot drinks to be dispensed by said automatic dispensing machine, wherein said heating device comprises a plate (2) which is connected at the output to a solenoid valve (3), so that said output of said solenoid valve (3) is configured to direct hot water to one or more mixers (5) placed below respective containers (10) of soluble products or to a selector device (6) configured to send hot water to said one or more mixers (5) or to a brewing infusion unit, **characterized in that** said heating device comprises a plurality of plates (2), each of said plates (2) constituting a rigid support for incorporating a coil of a thin resistive wire (1) which is embedded into each of said plates (2), and each plate (2) is independently activated, so that a first plate (2) operates at a prefixed temperature value which is different from the temperature value at which a second plate (2) operates.

2. Heating device according to claim 1, **characterized in that** said brewing infusion unit (7) is a coffee capsule or pod.

3. Heating device according to at least one of the preceding claims, **characterized in that** each plate (2) is a modular element.

4. Heating device according to at least one of the preceding claims, **characterized in that** each plate (2) is provided with a temperature sensor (8) which controls the activation of said solenoid valve (3) and with a thermostat (9) to manage and control the switching on and off of the machine and the overall safety of the heating device.

## Patentansprüche

1. Erwärmungsvorrichtung für Automaten zur Ausgabe von Heißgetränke mit einem an eine Wasserversorgungspumpe (4) angeschlossenen Einlass, welcher mit einem Rückschlagventil ausgestattet ist, damit der Kreislauf unter Druck bleibt, und welcher mittels eines Mengenmessers zur Lieferung der für die unterschiedlichen Heißgetränke, die von dem Ausgabeautomaten ausgegeben werden sollen, benötigten Menge von Wasser elektronisch geregelt ist, wobei die Erwärmungsvorrichtung eine Platte (2) umfasst, welche an dem Ausgang mit einem Magnetventil (3) verbunden ist, sodass der Ausgang des Magnetventils (3) konfiguriert ist, heißes Wasser zu einem oder mehreren Mischern (5), welche unterhalb entsprechender Behälter (10) von löslichen Produkten angeordnet sind, oder zu einer Auswahlvorrichtung (6) zu leiten, welche konfiguriert ist, heißes Wasser zu dem einen oder den mehreren Mischern (5) oder zu einer Aufgussbrüheinheit zu leiten, **dadurch gekennzeichnet, dass** die Erwärmungsvorrichtung eine Vielzahl von Platten (2) umfasst, wobei jede der Platten (2) einen starren Träger zur Aufnahme einer Wicklung eines dünnen Widerstandsdrahtes (1) enthält, welcher in jeder der Platten (2) eingebettet ist, und jede Platte (2) unabhängig aktiviert wird, sodass eine erste Platte (2) bei einem voreingestellten Temperaturwert betrieben wird, welcher unterschiedlich von dem Temperaturwert ist, bei welchen eine zweite Platte (2) betrieben wird.

2. Erwärmungsvorrichtung nach Anspruch 1, **dadurch gekennzeichnet, dass** die Aufgussbrüheinheit (7) eine Kaffeekapsel oder ein -Pad ist.

3. Erwärmungsvorrichtung nach zumindest einem der vorstehenden Ansprüche, **dadurch gekennzeichnet, dass** jede Platte (2) ein modulares Element ist.

4. Erwärmungsvorrichtung nach zumindest einem der vorstehenden Ansprüche, **dadurch gekennzeichnet, dass** jede Platte (2) mit einem Temperatursensor (8), welcher die Aktivierung des Magnetventils (3) steuert, und mit einem Thermostat (9) zur Verwaltung und Steuerung des Ein- und Ausschaltens der Maschine und der Gesamtsicherheit der Erwärmungsvorrichtung ausgestattet ist.

## Revendications

1. Dispositif chauffant pour distributeurs automatiques de boissons chaudes ayant une entrée raccordée à une pompe d'alimentation en eau (4), qui est pourvue d'un clapet de non-retour de manière à maintenir le circuit sous pression et qui est électroniquement régulée par un dispositif de mesure volumétrique pour délivrer la quantité d'eau nécessaire pour les différentes boissons chaudes destinées à être distribuées par ledit distributeur automatique, dans lequel ledit dispositif chauffant comprend une plaque (2) qui est reliée au niveau de la sortie à une électrovalve (3), de telle sorte que ladite sortie de ladite électrovalve (3) est configurée pour diriger de l'eau chaude jusqu'à un ou plusieurs mélangeurs (5) placés sous des récipients respectifs (10) de produits solubles ou jusqu'à un dispositif sélecteur (6) configuré pour envoyer de l'eau chaude auxdits un ou plusieurs mélangeurs (5) ou à une unité d'infusion par brassage, **caractérisé en ce que** ledit dispositif chauffant comprend une pluralité de plaques (2), chacune desdites plaques (2) constituant un support rigide pour incorporer une bobine d'un fil résistif mince (1) qui est encastrée dans chacune desdites plaques (2), et chaque plaque (2) est indépendamment activée, de telle sorte qu'une première plaque (2) fonctionne à une valeur de température prédéfinie qui est différente de la valeur de température à laquelle une seconde plaque (2) fonctionne.

2. Dispositif chauffant selon la revendication 1, **caractérisé en ce que** ladite unité d'infusion par brassage (7) est une capsule ou dosette de café.

3. Dispositif chauffant selon au moins une des revendications précédentes, **caractérisé en ce que** chaque plaque (2) est un élément modulaire.

4. Dispositif chauffant selon au moins une des revendications précédentes, **caractérisé en ce que** chaque plaque (2) est pourvue d'un capteur de température (8) qui commande l'activation de ladite électrovalve (3) et d'un thermostat (9) pour gérer et commander l'allumage et l'arrêt de la machine et la sécurité d'ensemble du dispositif chauffant.
